# EUROPEAN PATENT APPLICATION

(11) **EP 4 697 591 A1**
(43) Date of publication of application: **18.02.2026**
(21) Application number: 24787913.3
(22) Date of filing: 27.03.2024
(51) Int. Cl.: H02S 40/36, H02J 7/35

(54) **ONBOARD PHOTOVOLTAIC SYSTEM AND VEHICLE**

(30) Priority: 11.04.2023 CN 202310402916
(71) Applicant: BYD Company Limited, Shenzhen, Guangdong 518118 (CN)
(72) Inventor: LING, Heping, Shenzhen, Guangdong 518118 (CN); LIU, Junhua, Shenzhen, Guangdong 518118 (CN); LAI, Jinfu, Shenzhen, Guangdong 518118 (CN); LIU, Yuhan, Shenzhen, Guangdong 518118 (CN); ZHONG, Zeran, Shenzhen, Guangdong 518118 (CN)
(74) Representative: Mathys & Squire
(86) International application number: PCT/CN2024/083939
(87) International publication number: WO 2024/212807

(57) **Abstract**

A vehicle, which has an onboard photovoltaic system. The onboard photovoltaic system (100) comprises: a high-voltage photovoltaic module (110) and a switch module (120), wherein the switch module (120) is connected between a positive end of the high-voltage photovoltaic module (110) and a grounding end (GND), and is used for being switched on when providing protection for the high-voltage photovoltaic module (110), so as to lower an output voltage of the high-voltage photovoltaic module (110) to be below a safe voltage.

## Description

### CROSS-REFERENCE TO RELATED APPLICATIONS

The present disclosure requests the priority of the Chinese Patent Application No. 202310402916.9, titled "Onboard Photovoltaic System and Vehicle", filed on April 11, 2023. The entire contents of which are incorporated herein by reference.

### FIELD

The present disclosure relates to the field of new energy technology, specifically to an onboard photovoltaic system and vehicle.

### BACKGROUND

With the development of new energy technology, photovoltaic systems have been widely used in the automotive industry. Typically, photovoltaic systems sample high voltage output modes when charging the vehicle's power battery to achieve higher conversion efficiency and lower output current. However, high voltage output modes also introduce high voltage risks, and photovoltaic systems may be exposed to users due to vehicle failures or user maintenance. At this time, high voltage output modes may pose risks of electric shock to users, threatening their safety and compromising the safety of photovoltaic systems.

### SUMMARY

The present disclosure aims to at least partially solve one of the technical problems in related technologies. Therefore, the first objective of this disclosure is to propose an onboard photovoltaic system. By arranging a switch module (SW Module) between a positive of a high-voltage photovoltaic module (HVPV Module) and a grounding end, the system ensures that when protection of the high-voltage photovoltaic module is required, the switch module is switched on, causing the high-voltage photovoltaic module to short-circuit, thereby lowering the output voltage of the high-voltage photovoltaic module to be below a safe voltage, avoiding high voltage risks caused by the high-voltage photovoltaic module, protecting user safety, and improving the safety of the onboard photovoltaic system.

The second objective of this disclosure is to propose a vehicle.

To achieve the above objectives, the first embodiment of the present disclosure proposes an onboard photovoltaic system, the system includes: a high-voltage photovoltaic module and a switch module, wherein the switch module is connected between a positive end of the high-voltage photovoltaic module and a grounding end, and is used for being switched on when providing protection for the high-voltage photovoltaic module, so as to lower an output voltage of the high-voltage photovoltaic module to be below a safe voltage.

According to the disclosed embodiment of the onboard photovoltaic system, by arranging the switch module between the positive of the high-voltage photovoltaic module and the grounding end, the system ensures that when protection of the high-voltage photovoltaic module is required, the switch module is switched on, causing the high-voltage photovoltaic module to short-circuit, thereby lowering the output voltage of the high-voltage photovoltaic module to be below a safe voltage, avoiding high voltage risks caused by the high-voltage photovoltaic module, protecting user safety, and improving the safety of the onboard photovoltaic system.

According to one embodiment of this disclosure, the high-voltage photovoltaic module includes a first low-voltage photovoltaic module (LVPV Module) to an Nth low-voltage photovoltaic module connected in series, and a positive end of the Nth low-voltage photovoltaic module serves as the positive end of the high-voltage photovoltaic module, wherein N is an integer greater than 1.

According to one embodiment of this disclosure, the switch module is connected between a positive end of some low-voltage photovoltaic modules from the first low-voltage photovoltaic module to the (N-1)th low-voltage photovoltaic module and the grounding end.

According to one embodiment of this disclosure, the switch module is connected between a positive end of each low-voltage photovoltaic modules from the first low-voltage photovoltaic module to the (N-1)th low-voltage photovoltaic module and the grounding end.

According to one embodiment of this disclosure, the grounding end is the grounding end of the onboard photovoltaic system, and a negative end of the high-voltage photovoltaic module is connected to the grounding end.

According to one embodiment of this disclosure, the system further includes a control module, wherein the control module is respectively connected to a plurality of switch modules, and is used to control the plurality of switch modules to be switched on synchronously or in a time-division manner when providing protection for the high-voltage photovoltaic module.

According to one embodiment of this disclosure, the control module controls the plurality of switch modules to be switched on in a time-division manner in the order from the first low-voltage photovoltaic module to the Nth low-voltage photovoltaic module.

According to one embodiment of this disclosure, the control module is further configured to, when a fault occurs in any of the first low-voltage photovoltaic module to the (N-1)th low-voltage photovoltaic module, control the switch module corresponding to the faulty low-voltage photovoltaic module to be switched on.

According to one embodiment of this disclosure, the control module is further configured to protect the high-voltage photovoltaic module in response to a trigger signal, wherein the trigger signal comprises an active trigger signal and/or a passive trigger signal.

According to one embodiment of this disclosure, the active trigger signal includes a signal that detects an abnormality in one or more of the control module, the switch module, and the high-voltage photovoltaic module.

According to one embodiment of this disclosure, the control module is further configured to: control the switch module to be switched on and off, and determine whether an abnormality exists in the switch module or the control module based on the deviation between the output voltage of the high-voltage photovoltaic module when switched on and the output voltage of the high-voltage photovoltaic module when it is switched off; control the switch module to be switched off, and determine whether an abnormality exists in the high-voltage photovoltaic module based on the deviation between the output voltage of the high-voltage photovoltaic module and a preset voltage when it is switched off.

According to one embodiment of this disclosure, the passive trigger signal comprises one or more of vehicle collision signal, airbag deployment signal, power battery abnormality signal, and user-triggered signal.

According to one embodiment of this disclosure, the system further includes an onboard charger, the high-voltage photovoltaic module is connected between the positive and negative poles of the onboard charger, and the onboard charger is configured to convert the output voltage of the high-voltage photovoltaic module into a preset voltage and provide it to the vehicle load.

According to one embodiment of this disclosure, the control module is further configured to receive a trigger signal from the onboard charger.

According to one embodiment of this disclosure, the switch module includes a switch and an energy consuming element, and the switch and the energy consuming element are connected in series.

To achieve the above objectives, the second embodiment of the present disclosure proposes a vehicle including the aforementioned onboard photovoltaic system.

According to the disclosed embodiment of the vehicle, the aforementioned onboard photovoltaic system can avoid high voltage risks caused by the high-voltage photovoltaic module, protect user safety, and improve the safety of the onboard photovoltaic system.

The additional aspects and advantages of this disclosure will be partially presented in the following description, some of which will become apparent from the following description, or learned through practice of this disclosure.

### BRIEF DESCRIPTION OF THE DRAWINGS

FIG. 1 shows a structural schematic diagram of an onboard photovoltaic system according to an embodiment of the present disclosure;
FIG. 2 shows a structural schematic diagram of a high-voltage photovoltaic module according to an embodiment of the present disclosure;
FIG. 3 shows a structural schematic diagram of an onboard photovoltaic system according to another embodiment of the present disclosure;
FIG. 4 shows a flowchart of a photovoltaic system startup self-test according to an embodiment of the present disclosure;
FIG. 5 shows a structural schematic diagram of a vehicle according to an embodiment of the present disclosure.

### DETAILED DESCRIPTION

The following provides a detailed description of the disclosed embodiments, examples of which are shown in the drawings, where identical or similar reference numerals from beginning to end represent identical or similar elements or elements with identical or similar functions. The embodiments described below with reference to the drawings are exemplary and intended to explain the present disclosure, and should not be construed as limiting the present disclosure.

The onboard photovoltaic system and vehicle proposed in this disclosed embodiment are described below with reference to the drawings.

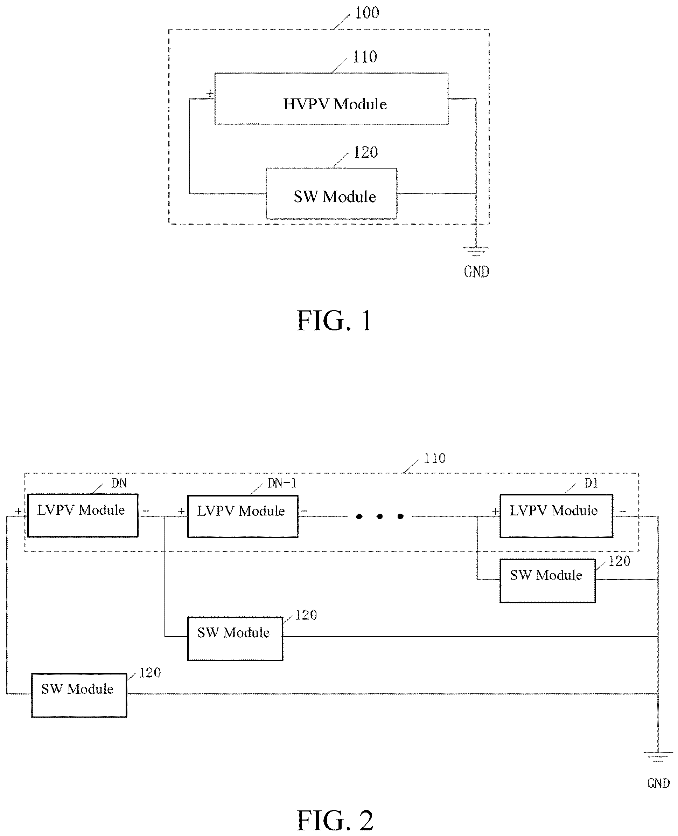

FIG. 1 shows a structural schematic diagram of an onboard photovoltaic system according to an embodiment of the present disclosure. Referring to FIG. 1, the photovoltaic system 100 includes: a high-voltage photovoltaic module 110 and a switch module 120, wherein the switch module 120 is connected between a positive end of the high-voltage photovoltaic module 110 and a grounding end GND, and is used for being switched on when providing protection for the high-voltage photovoltaic module 110, so as to lower an output voltage of the high-voltage photovoltaic module 110 to be below a safe voltage.

Specifically, as shown in FIG. 1, when the high-voltage photovoltaic module 110 is working normally, it converts solar energy into electrical energy and outputs high-voltage direct current through its positive end to charge the vehicle's power battery. When protection of the high-voltage photovoltaic module 110 is required, the switch module 120 is switched on, connecting the positive end of the high-voltage photovoltaic module 110 to the grounding end GND, thereby causing the high-voltage photovoltaic module to short-circuit, lowering the output voltage of the high-voltage photovoltaic module to be below a safe voltage, avoiding high voltage risks caused by the high-voltage photovoltaic module. Thus, the high-voltage protection function for the photovoltaic system is achieved.

In the above embodiments, by arranging the switch module between the positive end of the high-voltage photovoltaic module and the grounding end, the system ensures that when protection of the high-voltage photovoltaic module is required, the switch module is switched on, causing the high-voltage photovoltaic module to short-circuit, thereby lowering the output voltage of the high-voltage photovoltaic module to be below a safe voltage, avoiding high voltage risks caused by the high-voltage photovoltaic module, protecting user safety, and improving the safety of the onboard photovoltaic system.

In some embodiments, as shown in FIG. 2, the high-voltage photovoltaic module 110 includes a first low-voltage photovoltaic module D1 to an Nth low-voltage photovoltaic module DN connected in series, and a positive end of the Nth low-voltage photovoltaic module DN serves as the positive end of the high-voltage photovoltaic module 110, wherein N is an integer greater than 1.

Furthermore, the switch module 120 is connected between a positive end of some low-voltage photovoltaic modules D1 to DN-1 from the first low-voltage photovoltaic module D1 to the (N-1)th low-voltage photovoltaic module DN-1 and the grounding end GND.

Furthermore, the grounding end GND is the grounding end of the onboard photovoltaic system 100, and a negative end of the high-voltage photovoltaic module 110 is connected to the grounding end GND.

Specifically, as shown in FIG. 2, a multiple low-voltage photovoltaic modules (D1 to DN) are connected in series to form the high-voltage photovoltaic module 110. When the onboard photovoltaic system 100 is working normally, the output voltages of the multiple low-voltage photovoltaic modules (D1 to DN) are superimposed and output high-voltage direct current between the positive and negative ends (i.e. grounding end GND) of the high-voltage photovoltaic module 110. When protection of the high-voltage photovoltaic module 110 is required, one or more of a plurality of switch modules 120 are switched on, causing some low-voltage photovoltaic modules to short circuit and lowering the output voltage of the high-voltage photovoltaic module 110. The voltage reduction amplitude of the high-voltage photovoltaic module 110 can be adjusted according to the switch module 120 that is switched on, thereby achieving the function of adjusting the output voltage of the high-voltage photovoltaic module 110. For example, as shown in FIG. 2, when the switch module 120 connected to the positive end of the first low-voltage photovoltaic module D1 is switched on and the other switch modules 120 are switched off, the output voltage of the high-voltage photovoltaic module 110 will be lowered by the output voltage of one low-voltage photovoltaic module D1. As a result, the photovoltaic system is able to regulate the output voltage of high-voltage photovoltaic modules to meet the protection voltage requirements of high-voltage photovoltaic modules under different conditions, thereby improving the reliability and applicability of the photovoltaic system.

It should be noted that the output voltage of each low-voltage photovoltaic module (D1 to DN) can be any voltage below direct current 60V, which is the usual safe voltage and will not pose a safety threat to users. This ensures that the output voltage of the high-voltage photovoltaic module 110 can be lowered to a safe voltage through the switch module 120, thereby improving the safety of the photovoltaic system; In addition, each low-voltage photovoltaic module (D1 to DN) can also be composed of a plurality of photovoltaic modules connected in parallel to enable low-voltage output of the low-voltage photovoltaic modules (D1 to DN), which is not limited here.

Optionally, the switch module 120 is connected between a positive end of each low-voltage photovoltaic modules (D1 to DN-1) from the first low-voltage photovoltaic module D1 to the (N-1)th low-voltage photovoltaic module DN-1 and the grounding end GND.

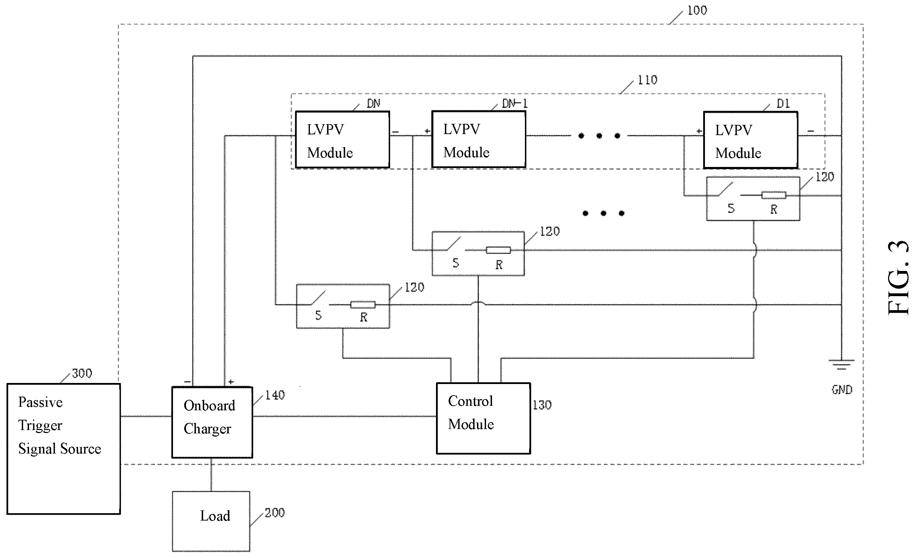

Specifically, as shown in FIG. 3, the switch module 120 can also be set up for each low-voltage photovoltaic module (D1 to DN), connecting the positive end of each low-voltage photovoltaic module (D1 to DN) to the grounding end GND. This way, when the output voltage of the high-voltage photovoltaic module 110 is lowered through the switch module 120, more switch modules 120 can be selected to be switched on, and the adjustment range and accuracy of the output voltage of the corresponding high-voltage photovoltaic module 110 are larger, thereby strengthening the ability of the photovoltaic system to adjust the output voltage of the high-voltage photovoltaic module and further improving the reliability and applicability of the photovoltaic system.

In some embodiments, as shown in FIG. 3, the switch module 120 includes a switch S and an energy consuming element R, and the switch S and the energy consuming element R are connected in series.

Specifically, as shown in FIG. 3, each switch module 120 includes the switch S and the energy consuming element R. The switch S is used to control the switch module 120 switched on or off, while the energy consuming element R plays a role in releasing electrical energy and limiting current, so that when the switch module 120 is switched on, the voltage and energy of the corresponding low-voltage photovoltaic modules (D1 to DN) can quickly decrease through the energy consuming element R to protect the safety of the photovoltaic system 100. At the same time, the current limiting effect of the energy consuming element R can also reduce the requirements for wire size and overcurrent capacity in the photovoltaic system 100, thereby reducing the design difficulty and production cost of the photovoltaic system.

It should be noted that switch S can be a device with switching function such as MOS transistor, transistor, relay, etc. The energy consuming element R can be an ordinary resistor, thermistor, or other energy consuming device inside, and there is no specific limitation here.

Optionally, the switch S in the switch module 120 can be a normally closed device. When the photovoltaic system 100 is operating normally, a control signal is output to the control terminal of the switch S to disconnect it, thereby enabling the high-voltage photovoltaic module 110 to output high-voltage direct current normally. When protection of the high-voltage photovoltaic module 110 is required, the photovoltaic system 100 stops outputting control signals to the control terminal of switch S, thereby restoring switch S to a normally closed state. This allows the photovoltaic system 100 to achieve the protection function of the high-voltage photovoltaic module 110 without the need for signal driving in emergency situations, thereby improving the safety of the photovoltaic system.

In some embodiments, as shown in FIG. 3, the photovoltaic system 100 further includes a control module 130, wherein the control module 130 is respectively connected to the plurality of switch modules 120, and is used to control the plurality of switch modules 120 to be switched on synchronously or in a time-division manner when providing protection for the high-voltage photovoltaic module 110.

Furthermore, the control module 130 controls the plurality of switch modules 120 to be switched on in a time-division manner in the order from the first low-voltage photovoltaic module D1 to the Nth low-voltage photovoltaic module DN.

Specifically, as shown in Figure 3, when protection of the high-voltage photovoltaic module 110 is required, the control module 130 can control the plurality of connected switch modules 120 to be switched on simultaneously through a single control signal, in order to discharge the voltage of the plurality of low-voltage photovoltaic modules (D1 to DN) at the same time, thereby quickly lowering the output voltage of the high-voltage photovoltaic module 110 and achieving the fast voltage protection function of the high-voltage photovoltaic system 110. At the same time, fewer control signals are required, which can simplify the control logic of the plurality of switch modules.

Alternatively, the control module 130 can also control the multiple switch modules 120 through a plurality of control signals to be switched on in a time-division manner in the order from the first low-voltage photovoltaic module D1 to the Nth low-voltage photovoltaic module DN, thereby gradually reducing the output voltage of the plurality of low-voltage photovoltaic modules (D1 to DN). The time-division switched-on operation can reduce the oscillation current generated by high-voltage protection in the high-voltage photovoltaic system 110, thereby protecting the safety of the high-voltage photovoltaic module 110 and improving the safety of the photovoltaic system.

Furthermore, the control module 130 is further configured to, when a fault occurs in any of the first low-voltage photovoltaic module D1 to the (N-1)th low-voltage photovoltaic module DN-1, control the switch module 120 corresponding to the faulty low-voltage photovoltaic module to be switched on.

Specifically, when a fault occurs in one of the first low-voltage photovoltaic module D1 to the (N-1)th low-voltage photovoltaic module DN-1, the control module 130 controls the switch module 120 corresponding to the faulty low-voltage photovoltaic module to be switched on, thereby short-circuiting the first low-voltage photovoltaic module D1 to the faulty low-voltage photovoltaic module. At this time, the remaining low-voltage photovoltaic modules in the high-voltage photovoltaic module 110 can still output high-voltage direct current normally, so that the fault of some low-voltage photovoltaic modules does not affect the normal operation of the high-voltage photovoltaic module, thereby improving the fault tolerance of the high-voltage photovoltaic module.

In some embodiments, the control module 130 is further configured to protect the high-voltage photovoltaic module 110 in response to a trigger signal, wherein the trigger signal includes an active trigger signal and/or a passive trigger signal.

In some embodiments, the active trigger signal includes a signal that detects an abnormality in one or more of the control module 130, the switch module 120, and the high-voltage photovoltaic module 110.

Specifically, the active trigger signal refers to the control module 130 actively detecting the photovoltaic system 100 during the start-up and operation of the vehicle. When an abnormality is detected in the control module 130, switch module 120, and high-voltage photovoltaic module 110 within the photovoltaic system 100, the control module 130 sends a signal to protect the high-voltage photovoltaic module 110 based on the signal, ensuring the safe operation of the photovoltaic system 100.

Furthermore, the passive trigger signal includes one or more of vehicle collision signal, airbag deployment signal, power battery abnormality signal, and user-triggered signal.

Specifically, passive trigger signals are signals transmitted from trigger sources at other locations of the vehicle to the control module 130. These signals indicate that the vehicle is in different types of abnormal states and requires high-voltage protection for the photovoltaic system. For example, vehicle collision signals or airbag deployment signals indicate that the vehicle may experience a collision accident causing the airbag to deploy; power battery abnormality signals indicate that the power battery may have problems such as high temperature or damage; user-triggered signals indicate that the user may discover abnormalities in the solar panel (such as cracks, black/yellow burning, tree leaves/debris obstruction, etc.), and manually trigger the protection function of the high-voltage photovoltaic module to avoid possible risks. Therefore, during vehicle operation, the control module 130 can detect the passive trigger signal in real time and protect the high-voltage photovoltaic module 110 when it receives the passive trigger signals, lowering the output voltage of the high-voltage photovoltaic module 110 and making the high-voltage protection function of the photovoltaic system more comprehensive, further improving the safety of the photovoltaic system.

In some embodiments, the control module 130 is further configured to: control the switch module 120 to be switched on and off, and determine whether an abnormality exists in the switch module 120 or the control module 130 based on the deviation between the output voltage of the high-voltage photovoltaic module 110 when switched on and the output voltage of the high-voltage photovoltaic module 110 when it is switched off; control the switch module 120 to be switched off, and determine whether an abnormality exists in the high-voltage photovoltaic module 110 based on the deviation between the output voltage of the high-voltage photovoltaic module 110 and a preset voltage when it is switched off.

Specifically, the control module 130 can determine whether an abnormality exists in the control module 130, switch module 120, and high-voltage photovoltaic module 110 by controlling the on/off of the switch module 120 and detecting the output voltage deviation of the high-voltage photovoltaic module 110. For example, the control module 130 can control the plurality of switch modules 120 to be switched on and off simultaneously, and detect the deviation between the output voltage of the high-voltage photovoltaic module 110 when switched on and the output voltage of the high-voltage photovoltaic module 110 when it is switched off. If the deviation is zero, it indicates that the switch S in the plurality of switch modules 120 may have sintered and caused a short circuit, or that the control module 130 has not controlled the plurality of switch modules 120 to operate simultaneously, that is, the switch module 120 or the control module 130 is abnormal. Meanwhile, if the deviation between the output voltage of the high-voltage photovoltaic module 110 and a preset voltage is large when the switch module 120 is switched off, it indicates that some of the output voltages in the plurality of low-voltage photovoltaic modules (D1 to DN) are abnormal, that is, the high-voltage photovoltaic module 110 is abnormal.

Thus, by controlling the on/off of the switch module through the control module, and detecting the deviation of the output voltage of the high-voltage photovoltaic module when switched on/off, as well as the deviation of the output voltage of the high-voltage photovoltaic module from a preset voltage when it is switched off, the abnormal state detection function of the control module, switch module, and high-voltage photovoltaic module is achieved.

In some embodiments, as shown in FIG. 3, the system 100 further includes an onboard charger 140, the high-voltage photovoltaic module 110 is connected between the positive and negative poles of the onboard charger 140, and the onboard charger 140 is configured to convert the output voltage of the high-voltage photovoltaic module 110 into a preset voltage and provide it to the vehicle load 200.

Furthermore, the control module 130 is further configured to receive a trigger signal from the onboard charger 140.

Specifically, the onboard charger 140 is mainly used to convert the output voltage of the high-voltage photovoltaic module 110 into different forms of preset voltages to provide power to different loads 200 of the vehicle, in order to improve the applicability of the photovoltaic system. At the same time, the onboard charger 140 is also used for the internal operation of the photovoltaic system 100, as well as for signal interaction processing between the photovoltaic system 100 and vehicle. The onboard charger 140 can be connected to the passive trigger signal source 300 and the control module 130. When an abnormality occurs in the vehicle, the onboard charger 140 receives the photovoltaic system abnormal signal output by the control module 130 or various vehicle abnormal signals from the passive trigger signal source. Subsequently, the onboard charger 140 outputs an active or passive trigger signal to the control module 130, causing the control module 130 to quickly lower the output voltage of the high-voltage photovoltaic module 110, achieving high-voltage protection of the photovoltaic system, avoiding high voltage risks of the high-voltage photovoltaic module, and improving the safety of the photovoltaic system.

Optionally, different types of passive trigger signal sources 300 of the vehicle are connected to the onboard charger 140 through diodes, and the passive trigger signal source 300 is connected to the anode of the diode, while the onboard charger 140 is connected to the cathode of the diode. The diode can avoid the signal of the onboard charger from affecting the passive trigger signal source 300, and can also achieve mutual isolation between the plurality of passive trigger signal sources to avoid their mutual influence, thereby improving the stability of the vehicle.

Optionally, during the startup of the photovoltaic system 100, the control module 130 can perform a startup self-test on the photovoltaic system 100 to ensure its safe startup and avoid safety accidents caused by faulty startup, thereby enabling the photovoltaic system to have a startup self-test function and improving its safety.

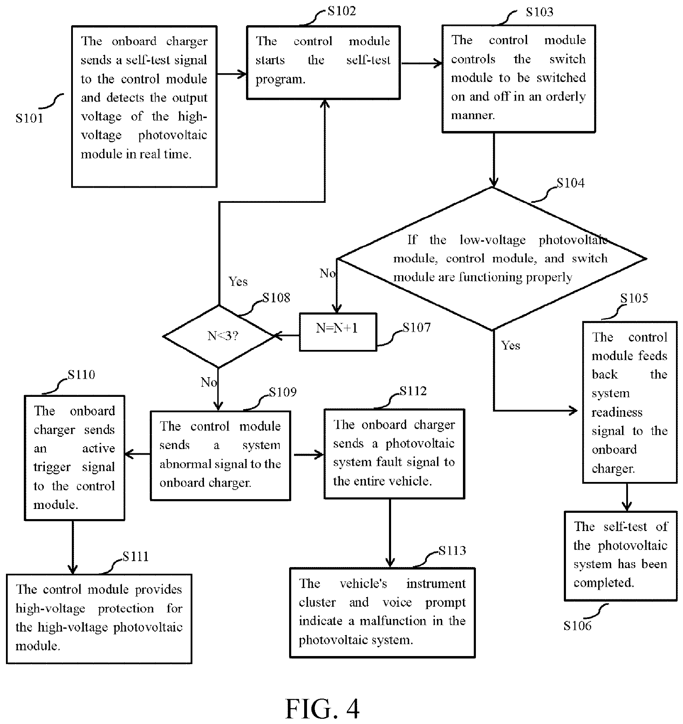

As a specific example, referring to FIG. 4, the startup self-test process of photovoltaic system 100 includes:

S101, the onboard charger sends a self-test signal to the control module and detects the output voltage of the high-voltage photovoltaic module in real time.

S102, the control module starts the self-test program.

S103, the control module controls the switch module to be switched on and off in an orderly manner.

S104, determine if the low-voltage photovoltaic module, control module, and switch module are functioning properly. If so, proceed to step S105. If not, proceed to step 107.

S105, the control module feeds back the system readiness signal to the onboard charger.

S106, the self-test of the photovoltaic system has been completed.

S107, perform a self-test fault flag N and perform a self-increment operation.

S108, determine if the self-test fault flag N is less than 3. If so, proceed to step 102. If not, proceed to step S109.

S109, the control module sends a system abnormal signal to the onboard charger and proceed step S110 and step S112.

S110, the onboard charger sends an active trigger signal to the control module.

S111, the control module provides high-voltage protection for the high-voltage photovoltaic module.

S112, the onboard charger sends a photovoltaic system fault signal to the entire vehicle.

S113, the vehicle's instrument cluster and voice prompt indicate a malfunction in the photovoltaic system.

Among them, the initial value of the self-test fault flag N is zero. The function of the self-test fault flag N is to make the control module 130 repeat the detection twice when it detects an abnormality in the photovoltaic system 100. Only when the three results are consistent, will the control module 130 output a system abnormality signal to improve the detection accuracy of the control module 130 and thus enhance the reliability of the photovoltaic system; in addition, through the startup self-test process shown in FIG. 4, the photovoltaic system can achieve the startup self-test function, improve the safety of the photovoltaic system, and also provide users with instrument cluster and voice prompts when abnormalities are detected in the photovoltaic system, thereby improving the user experience.

In summary, according to the onboard photovoltaic system in this disclosed embodiment, the plurality of low-voltage photovoltaic modules are connected in series to form a high-voltage photovoltaic module, and the plurality of switch modules are set between the positive end of the plurality of low-voltage photovoltaic modules and the grounding end. When protection of the high-voltage photovoltaic module is required, the control module controls the plurality of switch modules to be switched on, causing some low-voltage photovoltaic modules to short circuit, thereby lowering the output voltage of the high-voltage photovoltaic module to below a safe voltage, avoiding high-voltage risks of the high-voltage photovoltaic modules, and protecting user safety; at the same time, by setting up an onboard charger, the photovoltaic module can output direct current power of different voltages, improving the applicability of the onboard photovoltaic system; in addition, the onboard charger can output active/passive trigger signals to the control module based on the detection or connected trigger signal source of the control module, so that the photovoltaic module can quickly lower the output voltage of the high-voltage photovoltaic module when various abnormal situations occur in the vehicle, ensuring user safety and thus improving the safety of the onboard photovoltaic system.

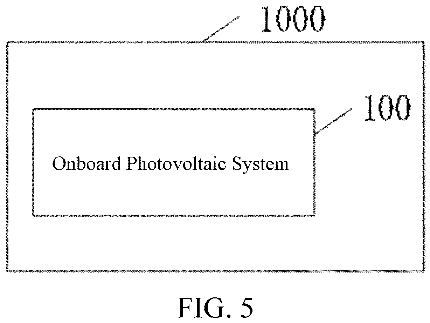

Corresponding to the above embodiments, the second aspect of the present disclosure proposes a vehicle 1000, as shown in FIG. 5, which includes the aforementioned onboard photovoltaic system 100.

According to the disclosed embodiment of the vehicle, through the aforementioned onboard photovoltaic system, the vehicle can quickly lower the output voltage of the high-voltage photovoltaic module in various situations such as vehicle collisions and battery abnormalities, avoiding high voltage risks caused by the high-voltage photovoltaic module, protecting user safety, and improving the safety of the onboard photovoltaic system.

It should be noted that the logic and/or steps represented in a flowchart or otherwise described herein, such as a sequential list of executable instructions used to implement logical functions, can be specifically implemented in any computer-readable medium for use by instruction execution systems, devices, or equipment (such as computer-based systems, systems including processors, or other systems that can take instructions from instruction execution systems, devices, or equipment and execute instructions), or used in conjunction with these instruction execution systems, devices, or equipment. For the purpose of this description, "computer-readable medium" may be any device that can contain, store, communicate, disseminate, or transmit programs for use in instruction execution systems, devices, or equipment, or in combination with such instruction execution systems, devices, or equipment. More specific examples of computer-readable media (non exhaustive list) include electrical connectors (electronic devices) with one or more wiring, portable computer enclosures (magnetic devices), random access memory (RAM), read-only memory (ROM), erasable and editable read-only memory (EPROM or flash memory), fiber optic devices, and portable optical disc read-only memory (CDROM). In addition, computer-readable media can even be paper or other suitable media on which the program can be printed, as the program can be obtained electronically, for example, by optical scanning of paper or other media, followed by editing, interpretation, or necessary processing in other suitable ways, and then stored in computer memory.

It will be understood that the various parts disclosed herein can be implemented using hardware, software, firmware, or a combination thereof. In the above embodiments, multiple steps or methods can be implemented using software or firmware stored in memory and executed by a suitable instruction execution system. For example, if implemented in hardware, as in another embodiment, any one or a combination of the following techniques known in the art can be used: discrete logic circuits with logic gate circuits for implementing logic functions on data signals, application specific integrated circuits with suitable combinational logic gate circuits, programmable gate arrays (PGA), field programmable gate arrays (FPGA), etc.

In the description of this disclosure, the reference to the terms "one embodiment", "some embodiments", "examples", "specific examples", or "some examples" means that the specific features, structures, materials, or characteristics described in conjunction with the embodiment or example are included in at least one embodiment or example disclosed herein. In this disclosure, the illustrative expressions of the above terms may not necessarily refer to the same embodiments or examples. Moreover, the specific features, structures, materials, or characteristics described can be combined in any one or more embodiments or examples in a suitable manner.

In addition, the terms "first" and "second" are only used for descriptive purposes and will not be understood as indicating or implying relative importance or implying the number of technical features indicated. Therefore, the features that are limited to "first" and "second" can explicitly or implicitly include at least one of these features. In this disclosure, the meaning of "a plurality of" refers to at least two, such as two, three, etc., unless otherwise specified.

In this disclosure, unless otherwise specified and limited, the terms "installation", "link", "connection", "fixation", etc. will be broadly understood, for example, they can be fixed connections, detachable connections, or integrated; it can be a mechanical connection or an electrical connection; it can be directly connected or indirectly connected through an intermediate medium, and can be a connection within two components or an interaction relationship between two components, unless otherwise specified. For person having ordinary skill in the art, the specific meanings of the above terms in this disclosure will be understood according to the specific situation.

Although the embodiments of the present disclosure have been shown and described above, it will be understood that the above embodiments are exemplary and should not be construed as limiting the present disclosure. Person having ordinary skill in the art may make changes, modifications, substitutions, and variations to the above embodiments within the scope of the present disclosure.

## Claims

1. An onboard photovoltaic system (100), comprising:
a high-voltage photovoltaic module (110) and a switch module (120), wherein the switch module (120) is connected between a positive end of the high-voltage photovoltaic module (110) and a grounding end (GND), and is used for being switched on when providing protection for the high-voltage photovoltaic module (110), so as to lower an output voltage of the high-voltage photovoltaic module (110) to be below a safe voltage.

2. The onboard photovoltaic system (100) according to claim 1, wherein the high-voltage photovoltaic module (110) comprises a first low-voltage photovoltaic module (D1) to an Nth low-voltage photovoltaic module (DN) connected in series, and a positive end of the Nth low-voltage photovoltaic module (DN) serves as the positive end of the high-voltage photovoltaic module (110), wherein N is an integer greater than 1.

3. The onboard photovoltaic system (100) according to claim 2, wherein the switch module (120) is connected between a positive end of some low-voltage photovoltaic modules (D1 to DN-1) from the first low-voltage photovoltaic module (D1) to the (N-1)th low-voltage photovoltaic module (DN-1) and the grounding end (GND).

4. The onboard photovoltaic system (100) according to claim 2, wherein the switch module (120) is connected between a positive end of each low-voltage photovoltaic modules (D1 to DN-1) from the first low-voltage photovoltaic module (D1) to the (N-1)th low-voltage photovoltaic module (DN-1) and the grounding end (GND).

5. The onboard photovoltaic system (100) according to any one of claims 1 to 4, wherein the grounding end (GND) is the grounding end of the onboard photovoltaic system (100), and a negative end of the high-voltage photovoltaic module (110) is connected to the grounding end (GND).

6. The onboard photovoltaic system (100) according to claim 3 or 4, wherein system (100) further comprises a control module (130), wherein the control module (130) is respectively connected to a plurality of switch modules (120), and is used to control the multiple switch modules (120) to be switched on synchronously or in a time-division manner when providing protection for the high-voltage photovoltaic module (110).

7. The onboard photovoltaic system (100) according to claim 6, wherein the control module (130) controls the plurality of switch modules (120) to be switched on in a time-division manner in the order from the first low-voltage photovoltaic module (D1) to the Nth low-voltage photovoltaic module (DN).

8. The onboard photovoltaic system (100) according to claim 6, wherein the control module (130) is further configured to, when a fault occurs in any of the first low-voltage photovoltaic module (D1) to the (N-1)th low-voltage photovoltaic module (DN-1), control the switch module (120) corresponding to the faulty low-voltage photovoltaic module to be switched on.

9. The onboard photovoltaic system (100) according to any one of claims 6 to 8, wherein the control module (130) is further configured to protect the high-voltage photovoltaic module (110) in response to a trigger signal, wherein the trigger signal comprises an active trigger signal and/or a passive trigger signal.

10. The onboard photovoltaic system (100) according to claim 9, wherein the active trigger signal comprises a signal that detects an abnormality in one or more of the control module (130), the switch module (120), and the high-voltage photovoltaic module (110).

11. The onboard photovoltaic system (100) according to claim 10, wherein the control module (130) is further configured to:
control the switch module (120) to be switched on and off, and determine whether an abnormality exists in the switch module (120) or the control module (130) based on the deviation between the output voltage of the high-voltage photovoltaic module (110) when switched on and the output voltage of the high-voltage photovoltaic module (110) when it is switched off;
control the switch module (120) to be switched off, and determine whether an abnormality exists in the high-voltage photovoltaic module (110) based on the deviation between the output voltage of the high-voltage photovoltaic module (110) and a preset voltage when it is switched off.

12. The onboard photovoltaic system (100) according to claim 9, wherein the passive trigger signal comprises one or more of vehicle collision signal, airbag deployment signal, power battery abnormality signal, and user-triggered signal.

13. The onboard photovoltaic system (100) according to any one of claims 9 to 12, wherein the system (100) further comprises an onboard charger (140), the high-voltage photovoltaic module (110) is connected between the positive and negative poles of the onboard charger (140), and the onboard charger (140) is configured to convert the output voltage of the high-voltage photovoltaic module (110) into a preset voltage and provide it to the vehicle load (200).

14. The onboard photovoltaic system (100) according to claim 13, wherein the control module (130) is further configured to receive a trigger signal from the onboard charger (140).

15. The onboard photovoltaic system (100) according to any one of claims 1 to 14, wherein the switch module (120) comprises a switch (S) and an energy consuming element (R), and the switch (S) and the energy consuming element (R) are connected in series.

16. A vehicle, comprising: the onboard photovoltaic system (100) according to any one of claims 1 to 15.
